# EUROPEAN PATENT APPLICATION

(11) **EP 4 722 291 A1**
(43) Date of publication of application: **08.04.2026**
(21) Application number: 24815575.6
(22) Date of filing: 30.05.2024
(51) Int. Cl.: C08L 27/12, C08J 5/00

(54) **FLUORINE RESIN COMPOSITION, MOLDED BODY, AND PRODUCTION METHOD FOR FLUORINE RESIN COMPOSITION**

(30) Priority: 02.06.2023 JP 2023091850
(71) Applicant: AGC INC., Chiyoda-ku, Tokyo 1008405 (JP)
(72) Inventor: ABE, Kaori, Tokyo 100-8405 (JP); MATSUMOTO, Mariko, Tokyo 100-8405 (JP); OTSUGU, Satoshi, Tokyo 100-8405 (JP); TAGUCHI, Daisuke, Tokyo 100-8405 (JP)
(74) Representative: Müller-Boré & Partner Patentanwälte PartG mbB
(86) International application number: PCT/JP2024/019895
(87) International publication number: WO 2024/248095

(57) **Abstract**

A fluororesin composition contains a first fluororesin having a thermal history of having been heated to a melting point or higher and a second fluororesin having no thermal history of having been heated to a melting point or higher, in which the first fluororesin and the second fluororesin are non-melt-formable fluororesins, and in a case where a test piece is obtained by compression-molding the fluororesin composition to obtain a preliminary molded body and sintering the preliminary molded body at 380°C for 2 hours or longer to be formed into a micro-dumbbell shape having a thickness of 0.5 mm and a size of 16 mm × 45 mm, a metal elution amount with respect to a total mass of the test piece when the test piece is left to stand in 3.6% by mass hydrochloric acid at 23°C for 24 hours is 5 ng/g or less.

## Description

### TECHNICAL FIELD

The present invention relates to a fluororesin composition, a molded body, and a production method for a fluororesin composition.

Priority is claimed on Japanese Patent Application No. 2023-091850, filed June 2, 2023, the content of which is incorporated herein by reference.

### BACKGROUND ART

A polytetrafluoroethylene resin (molding powder) obtained by suspension polymerization of tetrafluoroethylene (TFE) is molded by compression molding and then sintered to obtain a molded body. The molded body obtained by sintering is processed into a molded product having a desired shape by cutting processing or the like.

However, the polytetrafluoroethylene resin that has been sintered once (i.e., sintered PTFE), such as cutting chips generated during processing, is hard, and even compression after crushing cannot integrate its pieces, making the molding impossible. Therefore, the reuse of sintered PTFE was difficult.

Patent Document 1 discloses that, in a case of a molded body obtained by sintering a compression-molded product of a mixture of a powder of sintered PTFE and a PTFE dispersion (a dispersion liquid of unsintered PTFE) obtained by emulsion polymerization of TFE, a porosity after the sintering decreases and a tensile strength after the sintering increases as a mixing proportion of the unsintered PTFE increases. For example, an example is disclosed in which the porosity after the sintering is 0% in a case where the mixing proportion of the unsintered PTFE is 100%.

### Citation List

### Patent Document

Patent Document 1: Japanese Patent No. 6612001

### SUMMARY OF INVENTION

### Technical Problem

However, as a result of studies by the present inventors using the method disclosed in Patent Document 1, it is found that the obtained molded body has a lower compression strength than the molded body manufactured using only the above-described molding powder.

An object of the present invention is to provide a fluororesin composition that can provide a molded body having a high compression strength and having excellent processability, while using a fluororesin having a thermal history of having been heated to a melting point or higher, a molded body of the fluororesin composition, and a production method for a fluororesin composition.

### Solution to Problem

The present invention has the following aspects.
[1] A fluororesincomposition containing:
   a first fluororesin having a thermal history of having been heated to a melting point or higher; and
   a second fluororesin having no thermal history of having been heated to a melting point or higher,
   in which the first fluororesin and the second fluororesin are non-melt-formable fluororesins, and
   in a case where a test piece is obtained by compression-molding the fluororesin composition to obtain a preliminary molded body and sintering the preliminary molded body at 380°C for 2 hours or longer to be formed into a micro-dumbbell shape having a thickness of 0.5 mm and a size of 16 mm × 45 mm, a metal elution amount with respect to a total mass of the test piece when the test piece is left to stand in 3.6% by mass hydrochloric acid at 23°C for 24 hours is 5 ng/g or less.
[2] The fluororesin composition according to [1],
   in which the first fluororesin has a tetrafluoroethylene unit, and an amount of the tetrafluoroethylene unit with respect to a total mass of the first fluororesin is 99% by mass or more.
[3] The fluororesin composition according to [1] or [2],
   in which the second fluororesin has a tetrafluoroethylene unit, and an amount of the tetrafluoroethylene unit with respect to a total mass of the second fluororesin is 99% by mass or more.
[4] The fluororesin composition according to any one of [1] to [3],
   in which an amount of the first fluororesin with respect to a total mass of the first fluororesin and the second fluororesin is 10% by mass or more.
[5] A molded body of the fluororesin composition according to any one of [1] to [4].
[6] A production method for the fluororesin composition according to any one of [1] to [4], the production method including:
   washing a mixture containing the first fluororesin and the second fluororesin.

### Advantageous Effects of Invention

According to the present invention, it is possible to provide a fluororesin composition that can obtain a molded body having a high compression strength and having excellent processability, while using a fluororesin having a thermal history of having been heated to a melting point or higher, a molded body of the fluororesin composition, and a production method for a fluororesin composition.

### DESCRIPTION OF EMBODIMENTS

The following definitions of terms apply throughout the present specification and claims.

The "unit based on a monomer" is a generic phrase for an atomic group directly formed by polymerizing one monomer molecule and an atomic group obtained by chemically converting a part of the atomic group. In the present specification, a unit based on a monomer is also simply referred to as a monomer unit.

The "monomer" refers to a compound having a polymerizable carbon-carbon double bond.

The "melting point" means a temperature corresponding to a maximum value of a melting peak measured by a differential scanning calorimetry (DSC) method.

The "to" showing a numerical range means that numerical values described before and after the numerical range are included as the lower limit value and the upper limit value.

The "average particle diameter" means a 50% cumulative value (median diameter; D50) in a number-based particle diameter distribution, which is obtained using a laser diffraction/scattering type particle size distribution measuring device (for example, LA-920 measuring device manufactured by HORIBA, Ltd.).

The "melt-formable" means that melt flowability is exhibited.

The "melt flowability is exhibited" means that the existence of a temperature at which a melt flow rate is 0.1 to 1,000 g/10 minutes at a temperature that is higher than a melting point of a resin by 20°C or higher, under a condition of a load of 49 N,.

The "melt flow rate" means a melt mass-flow rate (MFR) defined in JIS K 7210:1999 (ISO 1133:1997).

The "non-melt-formable" means that the melt flowability is not exhibited.

The "standard specific gravity (hereinafter, also referred to as "SSG")" is a value indicating an average molecular weight, and a higher SSG value indicates a smaller molecular weight. The "specific gravity" can be measured in accordance with ASTM D1457-91a, D4895-91a.

A metal elution amount can be measured by inductively coupled plasma mass spectrometry.

### <<Fluororesin composition>>

The fluororesin composition according to the present embodiment contains a first fluororesin (hereinafter, also referred to as "fluororesin 1") having a thermal history of having been heated to a melting point or higher, and a second fluororesin (hereinafter, also referred to as "fluororesin 2") having no thermal history of having been heated to a melting point or higher. The fluororesin 1 and the fluororesin 2 are non-melt-formable fluororesins. A metal elution amount with respect to a total mass of a test piece of the fluororesin composition is 5 ng/g or less, wherein the test piece is left to stand in 3.6% by mass hydrochloric acid at 23°C for 24 hours, wherein a test piece is obtained by compression-molding the fluororesin composition to obtain a preliminary molded body and sintering the preliminary molded body at 380°C for 2 hours or longer to form the preliminary molded body into a micro-dumbbell shape having a thickness of 0.5 mm and a size of 16 mm × 45 mm.

The above-described metal elution amount is 5 ng/g or less, preferably 2 ng/g or less and more preferably 1 ng or less. The lower limit value of the metal elution amount is not particularly limited, and may be 0 ng/g, for example, 0.01 ng/g or more or 0.1 ng/g or more. The upper limit value and the lower limit value described above can be randomly combined together.

In a case where the metal elution amount is equal to or less than the above-described upper limit value, a compression strength of a molded body to be obtained is likely to improve.

Examples of the metal include iron, chromium, nickel, and copper.

### <Non-melt-formable fluororesin>

Both the fluororesin 1 and the fluororesin 2 are non-melt-formable fluororesins.

The fluororesin 1 and the fluororesin 2 may be the same or different from each other.

The fluororesin 1 and the fluororesin 2 may each independently be used alone or in combination of two or more kinds of fluororesins. When using two or more kinds of fluororesins in combination, there is no particular limitation as long as the mixture of the two or more kinds of fluororesins is non-melt-formable.

As the fluororesin 1 and the fluororesin 2, a polymer having a tetrafluoroethylene unit (hereinafter, also referred to as "TFE unit") is preferable; and examples thereof include polytetrafluoroethylene (PTFE), a tetrafluoroethylene-ethylene copolymer, a tetrafluoroethylene-hexafluoropropylene copolymer, a tetrafluoroethylene-perfluoro(alkyl vinyl ether) copolymer, a tetrafluoroethylene-chlorotrifluoroethylene copolymer, a tetrafluoroethylene-ethylene-hexafluoropropylene copolymer, and a tetrafluoroethylene-hexafluoropropylene-vinylidene fluoride copolymer.

It is preferable that the fluororesin 1 and the fluororesin 2 are each independently PTFE. In the PTFE, an amount of the TFE unit with respect to the total mass of the fluororesin is preferably 99% by mass or more. The amount of the TFE unit with respect to the total mass of the PTFE is more preferably 99.5% by mass or more, and may be 100% by mass.

Examples of a monomer unit other than the TFE unit include the above-described ethylene unit, a hexafluoropropylene unit, a perfluoro(alkyl vinyl ether) unit, a chlorotrifluoroethylene unit, a vinylidene fluoride unit, and monomer units derived from perfluoro(2,2-dimethyl-1,3-dioxole), perfluoro(4-methoxy-1,3-dioxole), perfluoroalkylethylene, and the like. The number of the monomer units other than the TFE unit may be 1 or 2 or more. By containing the monomer unit other than the TFE unit, crystallization of the PTFE is suppressed to some extent, and thus the PTFE improves in terms of a tensile strength, a tensile elongation, dielectric breakdown resistance, creep resistance, and the like.

### (Fluororesin 1)

The fluororesin 1 has a thermal history of having been heated to a melting point or higher one or more times. The fluororesin 1 can be obtained by crushing cutting chips produced while processing a primary molded body, which is manufactured by heating the fluororesin 1 to a melting point or higher, into a secondary molded body such as an industrial component having a desired shape, or obtained by crushing a secondary molded body that is no longer needed. The crushing can be performed by a crusher or the like. After the crushing, the fluororesin 1 may be further pulverized. The above-described heating may be, for example, heating by sintering required for manufacturing the molded body.

In a case where the fluororesin 1 is heated to a melting point or higher, a melting point of the fluororesin 1 is lowered as compared with a melting point of the fluororesin 1 before being heated to a melting point or higher.

The "fluororesin 1 has a thermal history of having been heated to a melting point or higher one or more times" can be confirmed by differential scanning calorimetry (DSC).

The melting point of the fluororesin 1 before being heated to a melting point or higher is preferably 360°C or lower, more preferably 355°C or lower, and still more preferably 350°C or lower. The lower limit value of the melting point is not particularly limited, but is preferably 100°C or higher and more preferably 150°C or higher. The melting point is preferably 100°C to 360°C, more preferably 100°C to 355°C, and still more preferably 150°C to 350°C.

In a case where the melting point is within the above-described range, a mechanical strength of the molded body to be obtained is likely to improve.

The melting point of the fluororesin 1 is preferably 335°C or lower, and more preferably 330°C or lower. The lower limit value of the melting point is not particularly limited, but is preferably 100°C or higher and more preferably 150°C or higher. The melting point is preferably 100°C to 335°C and more preferably 150°C to 330°C.

In a case where the melting point is within the above-described range, a mechanical strength of the molded body to be obtained is likely to improve.

A bulk density of the fluororesin 1 is preferably 100 g/L or more, more preferably 105 g/L or more, and still more preferably 110 g/L or more. In a case where the bulk density is equal to or higher than the above-described lower limit value, the amount of air entrapped during the manufacturing of the molded body is small, and thus degassing ability is excellent, and the fluororesin 1 is likely to be favorably fused between powder particles. Furthermore, the molded body to be obtained is less likely to have voids remaining, and thus uniformity of the molded body is also likely to improve.

An average particle diameter of the fluororesin 1 is preferably 1 to 500 µm, more preferably 5 to 300 µm, and still more preferably 5 to 100 µm.

In a case where the average particle diameter of the fluororesin 1 is within the above-described range, the uniformity of the molded body to be obtained improves.

The fluororesin 1 may be a crushed product of a molded body that has been molded and processed by a method including a step of heating, to a melting point or higher, a molding material containing PTFE obtained by suspension polymerization.

The PTFE obtained by suspension polymerization has an extremely high melt viscosity and exhibits such non-melt-formability that does not allow molding to be performed by a general molding method for thermoplastic resins, such as extrusion molding and injection molding. Therefore, molding of the PTFE manufactured by suspension polymerization (hereinafter, also referred to as "molding powder") is implemented by a method in which the molding powder is filled into a mold, compression-molded, and then sintered.

Specifically, in the method of molding the molding powder, first, the mold is filled with the molding powder at normal temperature, the molding powder is compression-molded to obtain a preliminary molded body, and the preliminary molded body is heated to a melting point or higher of the PTFE to be sintered, thereby obtaining a primary molded body. The molding powder may be granulated and used as a granulated product as necessary. In the granulation, an inorganic filler or other optional components may be blended.

Thereafter, the primary molded body is subjected to mechanical processing such as cutting processing, to be processed into a secondary molded body having a desired shape. Examples of the secondary molded body include industrial members such as a gasket, a lining, and an insulating film, and a square tank that receives a strong acid or a strong alkali in a semiconductor industry.

Cutting chips, scraps, or the like (hereinafter, also referred to as "cutting chips or the like"), which are produced when cutting the primary molded body to manufacture the secondary molded body, a powder obtained by crushing the cutting chips or the like, and a powder such as a powder obtained by crushing the secondary molded body that is no longer needed can be used as the fluororesin 1. In the present specification, the above-described cutting chips or the like, the above-described powders, and the like are also collectively referred to as "crushed products". The secondary molded body or the cutting chips or the like can be crushed by a crusher or the like. After the crushing, the crushed products may be further pulverized. A volume of one crushed product is, for example, 50 cm³ or less.

In the present embodiment, the crushed products may be washed. Examples of a washing solution for washing the crushed products include water, an organic solvent, and a surfactant. In addition, a washing solution such as an aqueous solution containing two or more kinds thereof may be used. An amount of the washing solution used is preferably 10 to 5,000 parts by mass, more preferably 50 to 4,000 parts by mass, and still more preferably 100 to 3,000 parts by mass with respect to 100 parts by mass of the crushed products. The washing may be performed by a method 1 in which the crushed products is immersed in the washing solution and allowed to stand, a method 2 in which stirring is performed, or a method 3 in which the washing solution is continuously supplied to the crushed products. An immersion time is preferably longer than 0 hours and 100 hours or shorter, more preferably longer than 0 hours and 80 hours or shorter, and still more preferably longer than 0 hours and 60 hours or shorter. A temperature of the washing solution is preferably 0°C to 200°C and more preferably 10°C to 150°C. In a case of the method 1 and the method 2, it is preferable to perform solid-liquid separation of the crushed products and the washing solution by filtration or the like, and then perform drying. In the method 1 and the method 2, in a case where a sequence from the addition of the washing solution to the mixture to the solid-liquid separation is counted as one washing, the washing is preferably performed 1 to 30 times, more preferably 1 to 25 times, and still more preferably 2 to 20 times. It is also preferable to perform the washing of the method 3 a plurality of times.

The crushed products to be washed may be a crushed product such as cutting chips produced directly in a case of manufacturing the secondary molded body, or a crushed product of a powder obtained by crushing the secondary molded body or the cutting chips or the like. In terms of operability, a crushed product such as cutting chips produced directly in a case of manufacturing the secondary molded body is preferable.

### (Fluororesin 2)

The fluororesin 2 has no thermal history of having been heated to a melting point or higher.

The melting point of the fluororesin 2 is preferably 360°C or lower, more preferably 355°C or lower, and still more preferably 350°C or lower. The lower limit value of the melting point is not particularly limited, but is preferably 100°C or higher and more preferably 150°C or higher. The melting point is preferably 100°C to 360°C, more preferably 100°C to 350°C, and still more preferably 150°C to 350°C.

In a case where the melting point is within the above-described range, a mechanical strength of the molded body to be obtained is likely to improve.

The "fluororesin 2 has no thermal history of having been heated to a melting point or higher" can be confirmed by differential scanning calorimetry (DSC).

The fluororesin 2 may be, for example, a fluororesin manufactured by emulsion polymerization.

The emulsion polymerization method is a polymerization method in which a monomer is polymerized in an aqueous medium containing water to obtain a dispersion liquid containing particles of the fluororesin 2. In general, the emulsion polymerization is performed by stirring a reaction solution containing water, a polymerization initiator, and a surfactant, and polymerizing the monomer in the reaction solution.

From the viewpoint of suppressing coloration of the molded body to be obtained, an amount of a nonionic surfactant is preferably 2 parts by mass or less, more preferably 1 part by mass or less, and still more preferably 0.1 parts by mass or less with respect to 100 parts by mass of the fluororesin in the dispersion liquid.

Examples of the nonionic surfactant will be described later.

An amount of the fluororesin 2 in the dispersion liquid is preferably 5% to 40% by mass, more preferably 7% to 35% by mass, and still more preferably 10% to 30% by mass.

An average particle diameter of the fluororesin 2 in the dispersion liquid is preferably 0.05 to 0.5 µm, more preferably 0.08 to 0.45 µm, and still more preferably 0.10 to 0.35 µm. In a case where the average particle diameter is within the above-described range, emulsion stability is excellent.

It is preferable that the fluororesin 2 contains PTFE obtained by the emulsion polymerization method.

In a method of producing PTFE by emulsion polymerization, a TFE monomer is homopolymerized alone in the above-described reaction solution, or a TFE monomer and a monomer other than the TFE monomer are copolymerized in the above-described reaction solution, thereby obtaining a dispersion liquid in which PTFE particles are dispersed in a dispersion medium.

For example, the TFE monomer is subjected to emulsion polymerization under pressure of preferably 0.5 to 3.0 MPa over a period of 1 to 20 hours in the presence of an aqueous medium, a polymerization initiator, an anionic fluorine-containing emulsifier, and a stabilizing auxiliary agent to obtain a dispersion liquid. Furthermore, the above-described nonionic surfactant may be blended. In addition, the dispersion liquid may be obtained without using a fluorine-based surfactant by the method described in PCT International Publication No. WO2021/085470, PCT International Publication No. WO2022/181662, and the like.

Examples of the anionic fluorine-containing emulsifier will be described later.

An amount of the anionic fluorine-containing emulsifier used in the emulsion polymerization step of the TFE monomer is preferably 0.15 to 2.0 parts by mass, more preferably 0.2 to 1.0 parts by mass, and still more preferably 0.2 to 0.5 parts by mass with respect to 100 parts by mass of the PTFE to be produced.

As the stabilizing auxiliary agent, paraffin wax, a fluorine-based oil, a fluorine-based solvent, a silicone oil, or the like is preferable, and paraffin wax is more preferable. The stabilizing auxiliary agent may be used alone or in combination of two or more kinds thereof.

The paraffin wax may be any of a liquid, a semisolid, or a solid at room temperature, and is preferably a saturated hydrocarbon having 12 or more carbon atoms. A melting point of the paraffin wax is preferably 40°C to 65°C and more preferably 50°C to 65°C. An amount of the stabilizing auxiliary agent used is preferably 0.1 to 12 parts by mass and more preferably 0.1 to 8 parts by mass with respect to 100 parts by mass of the aqueous medium to be used.

As the polymerization initiator, a water-soluble radical initiator, a water-soluble redox catalyst, or the like is preferably adopted. As the water-soluble radical initiator, a persulfate such as ammonium persulfate and potassium persulfate; or a water-soluble organic peroxide such as disuccinic acid peroxide, bisglutaric acid peroxide, and tert-butyl hydroperoxide is preferable. The polymerization initiator may be used alone or in combination of two or more kinds thereof. In addition, an oil-soluble initiator can also be used in the same manner. As the polymerization initiator, disuccinic acid peroxide is more preferable.

An amount of the polymerization initiator used is preferably 0.01 to 0.20 parts by mass and more preferably 0.01 to 0.15 parts by mass with respect to 100 parts by mass of the PTFE to be produced.

A standard specific gravity (SSG) of the PTFE resin in the dispersion liquid is an indicator of an average molecular weight of the PTFE, and the PTFE can be conceptually classified into a high-molecular-weight PTFE with the SSG of 2.14 or more and less than 2.22 and a low-molecular-weight PTFE with the SSG of 2.22 to 2.4. In a case where the molecular weight is low, physical properties of the PTFE are reduced, so that the SSG is preferably 2.14 or more and less than 2.22, and more preferably 2.14 to 2.21.

### (Anionic fluorine-containing emulsifier)

Examples of the anionic fluorine-containing emulsifier used in the emulsion polymerization include a fluorine-containing emulsifier represented by General Formula (1) (hereinafter, also referred to as "fluorine-containing emulsifier (1)").

General Formula (1): XCF₂CF₂(O)ₘCF₂CF₂OCF₂COOA

(in the formula, X is a hydrogen atom or a fluorine atom, A is a hydrogen atom, an alkali metal, or NH₄, and m is 0 or 1)

The fluorine-containing emulsifier (1) is preferable in that polymerization stabilizing action of the PTFE particles is favorable.

From the viewpoint of polymerization stability, X is preferably a fluorine atom.

From the viewpoint of polymerization stability and mechanical stability of the dispersion liquid, m is preferably 1. Specific examples of A include H, Li, Na, K, and NH₄. NH₄ is preferable in that the fluorine-containing emulsifier (1) shows good solubility in water and metal ion components are less likely to remain as impurities.

Particularly preferred examples of the fluorine-containing emulsifier (1) include CF₃CF₂CF₂CF₂OCF₂COONH₄ and C₂F₅OCF₂CF₂OCF₂COONH₄ (hereinafter, referred to as EEA), and EEA is more preferable.

The fluorine-containing emulsifier (1) can be manufactured as follows. An ester of a corresponding non-fluorine-containing carboxylic acid or a partially fluorinated carboxylic acid is fluorinated using a known fluorination method such as a liquid phase fluorination method in which it is reacted with fluorine in a liquid phase, a fluorination method using cobalt fluoride, or an electrochemical fluorination method. An ester bond of the obtained fluorinated ester is hydrolyzed, followed by purification of the hydrolyzed product. The purified product is then neutralized with ammonia.

### (Nonionic surfactant)

Examples of the nonionic surfactant blended in an aqueous emulsion liquid obtained by the emulsion polymerization include a nonionic surfactant represented by General Formula (2) (hereinafter, also referred to as "nonionic surfactant (2)") and a nonionic surfactant represented by General Formula (3) (hereinafter, also referred to as "nonionic surfactant (3)").

General Formula (2): R¹-O-D-H

(in the formula, R¹ is an alkyl group having 8 to 18 carbon atoms, O is an oxygen atom, and D is a polyoxyalkylene chain consisting of 5 to 20 oxyethylene groups and 1 or 2 oxypropylene groups)

General Formula (3): R²-O-E-G

(in the formula, R² is an alkyl group having 6 to 18 carbon atoms, O is an oxygen atom, E is a polyoxyalkylene chain consisting of 1 to 3 oxybutylene groups and 5 to 20 oxyethylene groups, and G is a hydrogen atom or a methyl group)

The nonionic surfactant may be used alone or in combination of two or more kinds thereof.

The nonionic surfactant in the dispersion liquid is preferably one or more selected from the group consisting of the nonionic surfactant (2) and the nonionic surfactant (3), and two or more kinds thereof may be used in combination. The nonionic surfactant (2) and the nonionic surfactant (3) may be used in combination.

The nonionic surfactant is a mixture of a plurality of molecules having a certain chain length distribution or isomers, and a chain length of the polyoxyalkylene chain represents an average chain length of the plurality of molecules. The number of oxyethylene groups and oxypropylene groups in the polyoxyalkylene chain is an average value. In addition, in a case where a plurality of kinds of nonionic surfactants are mixed and used, similarly, an average value of the number of oxyalkylene groups in respective nonionic surfactants may be within the above-described range. In addition, each numerical value is not limited to an integer.

In the nonionic surfactant (2), the number of carbon atoms in the alkyl group represented by R¹ is preferably in a range of 8 to 18 and more preferably 10 to 16. In a case where the number of carbon atoms in R¹ is equal to or more than the lower limit value of the above-described range, the surface tension of the dispersion liquid is likely to be low, and thus the wettability is likely to be high. In a case where the number of carbon atoms equal to or less than the upper limit value, storage stability of the dispersion liquid is excellent.

In a case where the alkyl group has a branched structure such that the alkyl group as a hydrophobic group is branched in the middle, the wettability of the dispersion liquid is more likely to increase. The alkyl group having a branched structure is preferably an alkyl group having a branch in a region from a carbon atom at the base of the alkyl group to a fifth carbon atom, and more preferably an alkyl group having a branch in a region from a carbon atom at the base of the alkyl group to a third carbon atom. In addition, the carbon atom having a branch may be a secondary carbon atom or a tertiary carbon atom, and is preferably a secondary carbon atom.

Examples of the alkyl group having a branched structure include C₁₀H₂₁CH(CH₃)CH₂-, C₉H₁₉CH(C₃H₇)-, and C₆H₁₃CH(C₆H₁₃)-.

In the nonionic surfactant (2), D as a hydrophilic group is a polyoxyalkylene chain consisting of 5 to 20 oxyethylene groups and 1 or 2 oxypropylene groups. In particular, in a case where the polyoxyalkylene chain consists of 7 to 12 oxyethylene groups and 1 or 2 oxypropylene groups, characteristics of the dispersion are suitable.

In a case where D includes an oxypropylene group, the defoaming ability is likely to improve. In a case where the number of oxypropylene groups is 2 or less, the surface tension is low, the wettability is likely to be high, and occurrence of coating repellency during overcoating is unlikely to occur, which is preferable.

In addition, in D, the oxypropylene group may be present between a polyoxyethylene group and a polyoxyethylene group, or may be bonded to a polyoxyethylene chain terminal. In a case where the oxypropylene group is bonded to the polyoxyethylene chain terminal, the defoaming ability is likely to improve. In particular, in a case where the oxypropylene group is bonded to a molecular terminal side of both terminals of the polyoxyethylene chain, the defoaming ability is more likely to improve.

In the nonionic surfactant (2), the average number of oxyethylene groups in one molecule is preferably 5 to 20 and more preferably in a range of 7 to 12. In a case where the average number of oxyethylene groups in one molecule is equal to or more than the lower limit value of the above-described range, favorable storage stability is likely to be obtained. In a case where the average number of oxyethylene groups is equal to or less than the upper limit value of the above-described range, favorable wettability is likely to be obtained.

As the nonionic surfactant (2), a commercially available nonionic surfactant having a normal molecular structure, such as C₁₃H₂₇O(C₂H₄O)₃C₃H₆OH, C₁₃H₂₇O(C₂H₄O)₉C₃H₆OH, C₁₃H₂₇O(C₂H₄O)₁₀(C₃H₆O)₂H, and C₁₆H₂₇O(C₂H₄O)₁₂(C₃H₆O)₂H, can be used.

An amount of the nonionic surfactant (2) is preferably 2 to 12 parts by mass and more preferably 4 to 12 parts by mass with respect to 100 parts by mass of the fluororesin in the dispersion liquid. In a case where the amount is equal to or more than the lower limit value of the above-described range, favorable storage stability is likely to be obtained. In a case where the amount of the nonionic surfactant (2) is large, the nonionic surfactant (2) is suitable for an application in which a thick coating is adopted, but the performance does not improve even in a case where the amount exceeds the upper limit value of the above-described range; and for economic reasons, it is preferable that the amount does not exceed the upper limit of the above-described range.

In the nonionic surfactant (3), the number of carbon atoms in the alkyl group represented by R² is preferably in a range of 6 to 18, more preferably 8 to 16, and still more preferably 10 to 14. In a case where the number of carbon atoms in the above-described alkyl group is equal to or more than the lower limit value of the above-described range, the surface tension of the dispersion liquid is likely to be low, and thus the wettability is likely to be high. In a case of being equal to or less than the upper limit value of the above-described range, storage stability of the dispersion liquid is excellent. In a case where the number of carbon atoms in the alkyl group is within the range, the wettability is favorable, and the storage stability is also favorable.

In a case where the alkyl group represented by R² has a branched structure, the wettability of the dispersion liquid is more likely to increase.

The carbon atom having a branch may be a secondary carbon atom or a tertiary carbon atom, and is preferably a secondary carbon atom. Examples of the alkyl group having a branched structure include C₁₀H₂₁CH(CH₃)CH₂-, C₉H₁₉CH(C₃H₇)-, C₆H₁₃CH(C₆H₁₃)-, and CH(CH₃)₂CH₂CH(CH₃)₂CH₂CH(CH(CH₃)₂CH₂-.

In the alkyl group represented by R², 10% or less of hydrogen atoms in the alkyl group may be replaced with a halogen element such as a fluorine atom, a chlorine atom, and a bromine atom. In addition, the alkyl group may contain 1 or 2 unsaturated bonds.

E in General Formula (3) is a polyoxyalkylene chain consisting of 1 to 3 oxybutylene groups and 5 to 20 oxyethylene groups. The number of oxybutylene groups is preferably 1 to 2.5 and more preferably 1 to 2. In a case where the number of oxybutylene groups is equal to or more than the lower limit value of the above-described range, the defoaming ability, the wettability, and the viscosity characteristics are likely to be favorable. In a case where the number is equal to or less than the upper limit value, the viscosity of the dispersion liquid is suppressed from increasing, and thus favorable stability is likely to be obtained. In a case where the number of oxybutylene groups is within the above-described range, the properties such as the viscosity, the stability, the defoaming ability, and the wettability are favorable, which is preferable.

The oxybutylene group may be branched or linear, and is preferably branched.

Examples of the oxybutylene group include -CH₂-CH(C₂H₅)-O-, - CH(C₂H₅)CH₂-O-, -CH(CH₃)-CH(CH₃)-O-, -CH₂CH₂-CH(CH₃)-O-, and - CH₂CH₂CH₂CH₂-O-.

Among these, -CH₂-CH(C₂H₅)-O-, -CH(C₂H₅)CH₂-O-, or -CH₂CH₂-CH(CH₃)-O- is preferable.

Examples of a raw material of the oxybutylene group include various butylene oxides; and specific examples thereof include 1,2-butylene oxide, 2,3-butylene oxide, tetrahydrofuran, and methyl oxetane.

In the nonionic surfactant (3), the number of oxyethylene groups in the polyoxyalkylene chain is 5 to 20, preferably 6 to 15 and more preferably 7 to 13. In a case where the number of oxyethylene groups is equal to or more than the lower limit value of the above-described range, the storage stability of the dispersion liquid is likely to be favorable. In a case where the number is equal to or less than the upper limit value, the wettability is likely to be favorable. In a case where the number of oxyethylene groups is within the above-described range, the properties such as the viscosity, the stability, the defoaming ability, and the wettability are favorable, which is preferable.

The oxybutylene group in the polyoxyalkylene chain may have a block structure or a random structure.

The oxybutylene group may be present at any portion of the polyoxyalkylene chain, and is preferably present in a region of 70% of the total length of the polyoxyalkylene chain from the R²-O- group side, and more preferably present in a region of 50% of the total length of the polyoxyalkylene chain from the R²-O- group side.

The portion of the polyoxyalkylene chain bonded to the R²-O- group is preferably an oxybutylene group and more preferably a polyoxybutylene chain consisting of 1 or 2 oxybutylene groups. In addition, the portion of the polyoxyalkylene chain bonded to the G group is preferably an oxyethylene group and more preferably a polyoxyethylene chain consisting of 5 to 20 oxyethylene groups.

The polyoxyalkylene chain having the above-described preferred structure has more favorable properties in terms of viscosity, stability, defoaming properties, wettability, etc., which is preferable.

G in General Formula (3) is a hydrogen atom or a methyl group, and is preferably a hydrogen atom.

The nonionic surfactant (3) can be obtained by adding butylene oxide and ethylene oxide to a higher alcohol by a known method. The butylene oxide and the ethylene oxide may be mixed and reacted at the same time, the butylene oxide may be reacted first and then the ethylene oxide may be reacted, or the ethylene oxide may be reacted first and then the butylene oxide may be reacted. A preferable method is the method in which the butylene oxide is first reacted and then the ethylene oxide is reacted.

Examples of the nonionic surfactant (3) include C₁₃H₂₇OCH₂CH(C₂H₅)O(C₂H₄O)₈H, C₁₀H₂₁CH(CH₃)CH₂OCH₂CH(C₂H₅)O(C₂H₄O)₈H, C₁₀H₂₁CH(CH₃)CH₂OCH(C₂H₅)CH₂O(C₂H₄O)₈H, C₁₂H₂₅OCH₂CH(C₂H₅)O(C₂H₄O)₈H, C₈H₁₇OCH₂CH(C₂H₅)O(C₂H₄O)₁₀H, C₁₂H₂₅OCH₂CH(C₂H₅)O(C₂H₄O)₁₀H, C₁₃H₂₇OCH₂CH(C₂H₅)O(C₂H₄O)₁₁H, C₁₃H₂₇OCH₂CH₂OCH₂CH(C₂H₅)O(C₂H₄O)₈H, C₁₂H₂₅O(CH₂CH(C₂H₅)O)₂(C₂H₄O)₈H, C₁₀H₂₁CH(CH₃)CH₂O(C₂H₄O)₉CH₂CH(C₂H₅)OH, C₁₆H₃₃OC₂H₄OCH(C₂H₅)CH₂O(C₂H₄O)₉H, C₁₂H₂₅OCH₂CH(C₂H₅)O(C₂H₄O)₈CH₂CH(C₂H₅)OH, C₁₃H₂₇OCH(CH₃)CH(CH₃)O(C₂H₄O)₈H, C₁₀H₂₁CH(CH₃)CH₂OCH(CH₃)CH(CH₃)O(C₂H₄O)₈H, C₁₀H₂₁CH(CH₃)CH₂OCH(CH₃)CH(CH₃)O(C₂H₄O)₈H, C₁₂H₂₅OCH(CH₃)CH(CH₃)O(C₂H₄O)₈H, C₈H₁₇OCH(CH₃)CH(CH₃)O(C₂H₄O)₁₀H, C₁₂H₂₅OCH(CH₃)CH(CH₃)O(C₂H₄O)₁₀H, C₁₃H₂₇OCH(CH₃)CH(CH₃)O(C₂H₄O)₁₁H, C₁₃H₂₇O(CH₂)₄O(C₂H₄O)₈H, C₁₂H₂₅O(CH₂)₄O(C₂H₄O)₈H, C₈H₁₇O(CH₂)₄O(C₂H₄O)₁₀H, C₁₂H₂₅O(CH₂)₄O(C₂H₄O)₁₀H, C₁₃H₂₇O(CH₂)₄O(C₂H₄O)₁₁H, C₁₃H₂₇O(CH₂)₂CH(CH₃)O(C₂H₄O)₈H, C₁₂H₂₅O(CH₂)₂CH(CH₃)O(C₂H₄O)₈H, C₈H₁₇O(CH₂)₂CH(CH₃)O(C₂H₄O)₁₀H, C₁₂H₂₅O(CH₂)₂CH(CH₃)O(C₂H₄O)₁₀H, and C₁₃H₂₇O(CH₂)₂CH(CH₃)O(C₂H₄O)₁₁H.

In a case where the dispersion liquid contains the nonionic surfactant (3), an amount of the nonionic surfactant (3) is preferably 0.1 to 12 parts by mass, more preferably 0.5 to 11 parts by mass, and still more preferably 1 to 10 parts by mass with respect to 100 parts by mass of the fluororesin in the dispersion liquid. In a case where the amount is equal to or more than the lower limit value of the above-described range, favorable storage stability is likely to be obtained. In addition, cracks are less likely to occur in a coating film of the fluororesin, and coating repellency is less likely to occur. In a case where the amount of the nonionic surfactant (3) is large, the nonionic surfactant (3) is suitable for an application in which a thick coating is adopted, but the performance does not improve even in a case where the amount exceeds the upper limit value of the above-described range; and for economic reasons, it is preferable that the amount does not exceed the upper limit of the above-described range.

In a case where the nonionic surfactant (2) and the nonionic surfactant (3) are used in combination as the nonionic surfactant, the number of oxybutylene groups per one nonionic surfactant molecule as an average value of the entire nonionic surfactant is preferably 0.5 to 2, more preferably 0.7 to 1.7, and still more preferably 0.9 to 1.5.

The nonionic surfactant (2) and the nonionic surfactant (3) may be added separately. A mixture containing the nonionic surfactant (3) and the nonionic surfactant (2) that is produced as a by-product in a case of preparing the nonionic surfactant (3) may be used.

The dispersion liquid contains water as a dispersion medium of the fluororesin particles. The water may be water contained in the aqueous emulsion liquid obtained by the emulsion polymerization, or may be water prepared separately from water in the aqueous emulsion liquid.

The dispersion liquid may contain one or more of a pH adjuster (for example, ammonia or the like), an anionic surfactant, a polyethylene oxide-based thickener, a polyurethane-based thickener, a thixotropic agent, a silicone-based wettability improver, a fluorine-based wettability improver, a preservative, and the like as necessary. Furthermore, one or more of a water-soluble organic solvent, an organic solvent (for example, toluene, xylene, or the like), a pigment (for example, carbon black or the like), glass powder, hollow glass beads, and a colorant (for example, graphite particles, silica particles, mica, or the like) may be blended.

### (Formulation)

The fluororesin composition may contain one or more of other solid components, in addition to the fluororesin 1 and the fluororesin 2.

Examples of the other solid components include solid components used in a production process of the fluororesin 1, solid components used in a production process of the fluororesin 2, and solid components added after the production of the fluororesin 1 and the fluororesin 2.

Specific examples thereof include an inorganic filler, a pigment (for example, carbon black or the like), a colorant (for example, graphite particles, silica particles, mica, or the like), and the above-described additives.

Examples of the inorganic filler include reinforcing fibers (glass fibers, carbon fibers, and the like), glass powder, bronze powder, graphite powder, and hollow glass beads.

An amount of the other solid components is preferably 70% by mass or less, more preferably 60% by mass or less, and still more preferably 50% by mass or less with respect to the total mass of solid contents of the fluororesin composition. The amount may be 0.

The total amount of the fluororesin 1 and the fluororesin 2 is preferably 30% to 100% by mass, more preferably 40% to 100% by mass, and still more preferably 50% to 100% by mass with respect to the total mass of solid contents of the fluororesin composition. The fluororesin composition is preferably solid, and more preferably in a powder form. An amount of the fluororesin 1 is preferably 10% by mass or more, more preferably 10% to 90% by mass, still more preferably 15% to 85% by mass, and particularly preferably 20% to 80% by mass with respect to the total mass of the fluororesin 1 and the fluororesin 2. In a case where the amount of the fluororesin 1 is equal to or more than the lower limit value of the above-described range, when the fluororesin 1 is derived from the cutting chips or the like in a case of manufacturing the above-described secondary molded body (in a case of recycled fluororesin), recycling efficiency is improved. In a case where the amount of the fluororesin 1 is equal to or less than the upper limit value of the above-described range, the compression strength of the molded body to be obtained is likely to improve.

### <<Production method for fluororesin composition>>

The production method the fluororesin composition according to the present embodiment includes washing a mixture containing the first fluororesin and the second fluororesin.

### <Method of producing mixture>

The mixture can be obtained by mixing the fluororesin 1 and the fluororesin 2. Examples of the mixing method include the following modes (1) to (4), and the mode (4) is preferable.
(1) A powder of fluororesin 1 and a powder of fluororesin 2 are mixed in a dry manner.
(2) A powder of fluororesin 1 and a dispersion liquid in which the fluororesin 2 is dispersed are mixed with each other.
(3) A dispersion liquid in which the fluororesin 1 is dispersed and a powder of fluororesin 2 are mixed with each other.
(4) A dispersion liquid in which the fluororesin 1 is dispersed and a dispersion liquid in which the fluororesin 2 is dispersed are mixed with each other.

As the dispersion liquid in which the fluororesin 1 is dispersed, a dispersion liquid obtained by mixing a powder of fluororesin 1 produced by the above-described production method with a water-soluble organic solvent is preferable. As the water-soluble organic solvent, from the viewpoint of miscibility of the fluororesin 1 and water, one or more water-soluble organic solvents selected from the group consisting of a non-protonic water-soluble organic solvent and alcohols are preferable. The alcohols may have an amino group or an alkoxy group as a substituent.

As the non-protonic water-soluble organic solvent, acetone, tetrahydrofuran, or acetonitrile is preferable. As the alcohols, methanol, ethanol, propanol, isopropyl alcohol, or 1-methoxy-2-propanol is preferable. Among the above, as the water-soluble organic solvent, isopropyl alcohol is more preferable. The water-soluble organic solvent may be used alone or in combination of two or more kinds thereof.

An amount of the fluororesin 1 is preferably 3% to 70% by mass, more preferably 5% to 65% by mass, and still more preferably 10% to 60% by mass with respect to the total mass of the dispersion liquid in which the fluororesin 1 is dispersed.

As the dispersion liquid in which the fluororesin 2 is dispersed, a dispersion liquid in which the fluororesin 2 produced by the above-described emulsion polymerization is dispersed is preferable. A dispersion liquid in which a nonionic surfactant is blended in the above-described dispersion liquid may be used in order to improve the storage stability. In a case where the powder of fluororesin 2 is used, it is possible to use a powder of fluororesin 2 which is obtained by separating the fluororesin 2 from the solvent in the dispersion liquid in which the fluororesin 2 is dispersed by filtration, drying, or the like.

An amount of the fluororesin 2 is preferably 5% to 40% by mass, more preferably 7% to 35% by mass, and still more preferably 10% to 30% by mass with respect to the total mass of the dispersion liquid in which the fluororesin 2 is dispersed.

In a case of the above-described modes (2) to (4), the total amount of the fluororesin 1 and the fluororesin 2 is preferably 10% to 50% by mass, more preferably 12% to 45% by mass, and still more preferably 15% to 35% by mass with respect to the total mass of the mixture. In a case where the total amount of the fluororesin 1 and the fluororesin 2 is equal to or more than the lower limit value of the above-described range, the fluororesin 1 and the fluororesin 2 are likely to aggregate, and thus solid-liquid separation easily occurs. In a case where the total amount of the fluororesin 1 and the fluororesin 2 is equal to or less than the upper limit value of the above-described range, the mixing of the fluororesin 1 and the fluororesin 2 is likely to be promoted.

In a case of the above-described mode (4), an amount of the water-soluble organic solvent is preferably 2 to 150 parts by mass, more preferably 5 to 140 parts by mass, and still more preferably 10 to 130 parts by mass with respect to 100 parts by mass of water in the mixture.

A metal content is preferably 0 to 10 mg/g, more preferably 0 to 5 mg/g, and still more preferably 0 to 1 mg/g with respect to the total mass of solid contents of the mixture. In a case where the metal content is equal to or more than the lower limit value of the above-described range, the production method for the fluororesin composition according to the present embodiment can be suitably adopted. In a case where the metal content is equal to or less than the upper limit value of the above-described range, the compression strength of the molded body to be obtained is likely to improve.

### (Method of washing mixture)

The washing of the mixture can be performed by adding a washing solution to the mixture containing the powders of fluororesin 1 and fluororesin 2. In a case of the above-described modes (2) to (4), the mixture is stirred and aggregated to obtain an aggregate. The above-described aggregate is filtered to separate the aggregate from the solvent, and then washed with a large amount of water. Thereafter, the mixture containing the powders of fluororesin 1 and fluororesin 2 can be obtained by drying.

Examples of a washing solution for washing the mixture include water and an organic solvent. In addition, a washing solution such as an aqueous solution containing two or more kinds thereof may be used. An amount of the washing solution used is preferably 10 to 5,000 parts by mass, more preferably 50 to 4,000 parts by mass, and still more preferably 100 to 3,000 parts by mass with respect to 100 parts by mass of solid contents of the mixture. The washing may be performed by a method 1 in which the mixture is immersed in the washing solution and allowed to stand, a method 2 in which stirring is performed, or a method 3 in which the washing solution is continuously supplied. An immersion time is preferably longer than 0 hours and 100 hours or shorter, more preferably longer than 0 hours and 80 hours or shorter, and still more preferably longer than 0 hours and 60 hours or shorter. A temperature of the washing solution is preferably 0°C to 200°C and more preferably 10°C to 150°C. In a case of the method 1 and the method 2, it is preferable to perform solid-liquid separation of the mixture and the washing solution by filtration or the like, and then perform drying. In the method 1 and the method 2, in a case where a sequence from the addition of the washing solution to the mixture to the solid-liquid separation is counted as one washing operation, the washing operation is preferably performed 1 to 30 times, more preferably 1 to 25 times, and still more preferably 2 to 20 times. It is also preferable to perform the washing of the method 3 a plurality of times.

### <Molded body>

The molded body according to the present embodiment is obtained by compression-molding the powder of fluororesin composition described above, and then sintering the compression-molded product. Specifically, the powder of fluororesin composition is placed in a mold and compression-molded by pressurization to obtain a preliminary molded body, and the obtained preliminary molded body is sintered to obtain a primary molded body. A shape of the primary molded body is not particularly limited. For example, the primary molded body may have a block shape such as a cylindrical shape and a polygonal columnar shape.

In a case of compression-molding the above-described fluororesin composition, it is preferable to pressurize the fluororesin composition at a pressure of 100 to 350 kg/cm².

The sintering temperature after the above-described preliminary molding is preferably 360°C to 380°C.

The obtained primary molded body may be processed into a secondary molded body having a desired shape by cutting processing or the like. Examples of use of the secondary molded body include a seal, a packing, a roller, a socket, and a joint.

The molded body according to the present embodiment may be the above-described primary molded body or the above-described secondary molded body.

### <Mechanism of action>

The fluororesin composition according to the embodiment of the present invention contains the fluororesin 1 having a thermal history of having been heated to a melting point or higher. In a case where the fluororesin 1 is derived from the cutting chips or the like in a case of manufacturing the above-described secondary molded body, a metal derived from a cutting machine used in a cutting step or from a crusher used in a crushing step may be mixed. The present inventors have found for the first time that the mixing of the metal deteriorates the compression strength of the molded body obtained from the above-described fluororesin composition. It is found that it is possible to prevent a decrease in compression strength and increase recycling efficiency of the fluororesin by adjusting the metal elution amount (with respect to a total mass of a test piece of the fluororesin composition) to 5 ng/g or less when the test piece is left to stand in 3.6% by mass hydrochloric acid at 23°C for 24 hours, wherein the test piece is obtained by compression-molding the fluororesin composition to obtain a preliminary molded body and sintering the preliminary molded body at 380°C for 2 hours or longer to form the preliminary molded body into a micro-dumbbell shape having a thickness of 0.5 mm and a size of 16 mm × 45 mm.

### Examples

Hereinafter, the present invention will be further described in detail by Examples, but the present invention is not limited to Examples. In the following examples, Example 1 is an example according to the present embodiment, Examples 2 and 3 are comparative examples, and Example 4 is a reference example.

### <Evaluation method>

### (Melting point)

A melting point was determined from an endothermic peak in a case where the fluororesin had been heated to 380°C at 10 °C/min in an air atmosphere using a differential scanning calorimeter (DSC 8500, manufactured by PerkinElmer, Inc.). In a case where there were a plurality of endothermic peaks, a peak temperature of the largest endothermic peak was used.

### (Average particle diameter)

An average particle diameter was calculated by dispersing the powder of fluororesin in water and measuring a number-based particle size distribution using a laser diffraction/scattering type particle size distribution measuring device (LA-920 measuring device manufactured by HORIBA, Ltd.).

### (Standard specific gravity)

The measurement was performed in accordance with ASTM D1457-91a, D4895-91a.

### (Metal elution test)

50 g of 3.6% by mass hydrochloric acid was added to 10 g of a molded body 1B, 2B, or 4B obtained in Examples 1, 2 and 4, and the resulting was allowed to stand at 23°C for 24 hours, followed by solid-liquid separation. Then, a metal amount in the resulting solution was measured by inductively coupled plasma mass spectrometry (ICP-MS; 7900 ICP-MS manufactured by Agilent Technologies, Inc.). The obtained metal amount was divided by the mass of the molded body 1B, 2B, or 4B to obtain a metal elution amount.

### (Evaluation of compression strength)

A compression strength of molded bodies 1A to 4A obtained in Examples 1 to 4 described later was measured in accordance with ASTM D695 using a universal material tester (RTF-1350 manufactured by Orientec Co., Ltd.).

The compression strength (0.2% proof stress) was a stress at a strain of 0.2%. The larger this value, the greater the compression strength. The evaluation was performed according to the following criteria.
A: compression strength (0.2% proof stress) of 7 MPa or more
B: compression strength (0.2% proof stress) of less than 7 MPa

A compressive stress at a compressive strain of 10% (stress at 10% deformation) indicates a compressive stress at a strain of 10%. The larger this value, the greater the compression strength. The evaluation was performed according to the following criteria.
A: compression strength (stress at 10% deformation) of 16 MPa or more
B: compression strength (stress at 10% deformation) of less than 16 MPa

### (Production Example 1)

A powder of fluororesin A (molding powder) consisting only of TFE units was produced by suspension polymerization. The fluororesin A is a fluororesin having no thermal history of having been heated to a melting point or higher.

### (Production Example 2)

The fluororesin A was preliminarily molded, and then sintered at a melting point or higher to produce a primary molded body. Offcuts or scraps generated when cutting out the secondary molded body from the obtained primary molded body were subjected to crushing processing to obtain a powder of fluororesin B having an average particle diameter of 40 µm or less. The fluororesin B is a fluororesin having a thermal history of having been heated to a melting point or higher. A melting point of the obtained fluororesin B was 329°C. In the obtained fluororesin B, there was no temperature at which a melt flow rate was 0.1 to 1,000 g/10 minutes at a temperature that was higher than the melting point of the resin by 20°C or higher, under a load of 49 N, and the fluororesin B was non-melt-formable. 200 g of the fluororesin B and 200 g of isopropanol were mixed to obtain a dispersion liquid B. An amount of the fluororesin B with respect to the total mass of the dispersion liquid B was 50% by mass.

### (Production Example 3)

36 g of EEA, 555 g of paraffin wax (melting point: 55°C), and 61.3 liters of deionized water were charged into a 100 L stainless steel autoclave equipped with a baffle and a stirrer. After nitrogen substitution in the autoclave, the inside of the autoclave was depressurized, TFE was introduced thereto, and the temperature was raised to 62°C while stirring. Furthermore, the TFE was fed under pressure until the internal pressure reached 1.765 MPa, and 26.3 g of disuccinic acid peroxide (concentration: 80% by mass; the remainder was water) was dissolved in 1 liter of hot water at approximately 70°C, and injected thereto.

Since the internal pressure of the autoclave dropped to 1.716 MPa after approximately 3 minutes, the TFE was fed under pressure to maintain the internal pressure at 1.765 MPa, and the polymerization was carried out. During the polymerization, a total of 53 g of EEA was injected thereto by two separate injections of EEA dissolved in hot water. The autoclave temperature was gradually raised to 72°C, the reaction was terminated when the amount of the TFE charged under pressure was 22 kg, and the TFE in the autoclave was released to the atmosphere. The polymerization time was 105 minutes. After cooling, the solidified paraffin wax on the upper part was removed to obtain a dispersion liquid C in which a fluororesin C consisting only of a TFE unit produced by emulsion polymerization was dispersed. An amount of the fluororesin C in the dispersion liquid C with respect to the total mass of the dispersion liquid C was approximately 25.0% by mass, and the EEA concentration was 0.40 parts by mass with respect to 100 parts by mass of the fluororesin C. An average particle diameter of the fluororesin C in the dispersion liquid C was 0.26 µm. A standard specific gravity (SSG) of the fluororesin C was 2.21. A melting point of the fluororesin C was 337°C. In the obtained fluororesin C, there was no temperature at which a melt flow rate was 0.1 to 1,000 g/10 minutes at a temperature that was higher than the melting point of the resin by 20°C or higher, under a load of 49 N, and the fluororesin C was non-melt-formable.

### (Example 1)

798 g of the dispersion liquid C and 802 g of water were charged into an 8 L stainless steel tank equipped with a baffle and a stirrer, and stirred. 400 g of the dispersion liquid B was added to the stirred dispersion liquid C to obtain a dispersion liquid D that was a mixture containing the fluororesin B and the fluororesin C. A mass ratio (fluororesin B:fluororesin C) of the fluororesin B and the fluororesin C in the dispersion liquid D was 1:1. A mass ratio (IPA:water) of the IPA and the water in the dispersion liquid D was 12:88. The total amount of the fluororesin B and the fluororesin C with respect to the total mass of the dispersion liquid D was 20.0% by mass.

The dispersion liquid D was stirred at 680 rpm for 10 minutes using the stirrer to aggregate the solid contents in the dispersion liquid D, and the solvent was separated by filtration to obtain an aggregate 1 before washing. The separated aggregate 1 was transferred to a stainless steel tank, 300 parts by mass of water was added to 100 parts by mass of the aggregate 1, the resulting mixture was stirred, and then filtration was carried out to perform a washing step. The washing step was repeated three times in total to obtain an aggregate 2 after washing. The obtained aggregate 2 was placed in a pan, vacuum-dried at 25°C for 2 hours or longer, and dried at 200°C for 10 hours or longer to obtain a fluororesin composition 1 that was a mixture of a powder of fluororesin B and a powder of fluororesin C.

6.5 g of the obtained fluororesin composition 1 was placed in a mold having a diameter of 12.95 mm, and pressurized at 320 kg/cm² to obtain a preliminary molded body. The preliminary molded body was sintered at 380°C for 2 hours to obtain a molded body 1A of Example 1.

345 g of the obtained fluororesin composition 1 was placed in a mold having a diameter of 7.3 mm, and pressurized at 320 kg/cm² to obtain a preliminary molded body. The preliminary molded body was sintered at 380°C for 2 hours to obtain a molded body. The obtained molded body was subjected to skiving to produce a sheet having a thickness of 0.5 mm, and the resulting was punched into a test piece having a micro-dumbbell shape of 16 mm × 45 mm to obtain a molded body 1B (test piece in a micro-dumbbell shape) of Example 1. The above-described evaluations were performed using the molded bodies 1A and 1B. The results are shown in Table 1 (the same applies to Examples 2 to 4).

### (Example 2)

The aggregate 1 before washing, which was separated in Example 1, was transferred to a stainless steel tank, 100 parts by mass of water was added to 100 parts by mass of the aggregate 1, the resulting mixture was stirred, and water was separated by filtration to obtain an aggregate 3 after washing. The obtained aggregate 3 was placed in a pan, vacuum-dried at 25°C for 2 hours or longer, and dried at 200°C for 10 hours or longer to obtain a fluororesin composition 2 that was a mixture of a powder of fluororesin B and a powder of fluororesin C. A molded body was produced in the same manner as in Example 1, except that the fluororesin composition 2 was used instead of the fluororesin composition 1, thereby obtaining molded bodies 2A and 2B (test pieces in a micro-dumbbell shape) of Example 2.

### (Example 3)

A molded body was produced in the same manner as in Example 1, except that the fluororesin B was used instead of the fluororesin composition 1, thereby obtaining a molded body 3A of Example 3. On the other hand, in a case where the fluororesin B was used, a molded body 3B (test piece in a micro-dumbbell shape) could not be molded because the skiving could not be carried out.

### (Example 4)

A molded body was produced in the same manner as in Example 1, except that the fluororesin A was used instead of the fluororesin composition 1, thereby obtaining molded bodies 4A and 4B (test pieces in a micro-dumbbell shape) of Example 4.

**[Table 1]**

| | | Example 1 | Example 2 | Example 3 | Example 4 |
|---|---|---|---|---|---|
| Formulation [parts] | Fluororesin A | 0 | 0 | 0 | 100 |
| | Fluororesin B | 50 | 50 | 100 | 0 |
| | Fluororesin C | 50 | 50 | 0 | 0 |
| Evaluation | Metal elution amount [ng/g] | < 1 | 5 < | - | < 1 |
| | Compression strength (0.2% proof stress) | A | B | B | A |
| | Compression strength (stress at 10% deformation) | A | B | B | A |

It was found that the molded body of Example 1, in which the metal elution amount was 5 ng/g or less, had excellent compression strength.

## Claims

1. A fluororesin composition comprising:
a first fluororesin having a thermal history of having been heated to a melting point or higher; and
a second fluororesin having no thermal history of having been heated to a melting point or higher,
wherein the first fluororesin and the second fluororesin are non-melt-formable fluororesins, and
a metal elution amount with respect to a total mass of a test piece of the fluororesin composition is 5 ng/g or less when the test piece is left to stand in 3.6% by mass hydrochloric acid at 23°C for 24 hours, wherein the test piece is obtained by compression-molding the fluororesin composition to obtain a preliminary molded body and sintering the preliminary molded body at 380°C for 2 hours or longer to form the preliminary molded body into a micro-dumbbell shape having a thickness of 0.5 mm and a size of 16 mm × 45 mm.

2. The fluororesin composition according to Claim 1,
wherein the first fluororesin has a tetrafluoroethylene unit, and an amount of the tetrafluoroethylene unit with respect to a total mass of the first fluororesin is 99% by mass or more.

3. The fluororesin composition according to Claim 2,
wherein the second fluororesin has a tetrafluoroethylene unit, and an amount of the tetrafluoroethylene unit with respect to a total mass of the second fluororesin is 99% by mass or more.

4. The fluororesin composition according to any one of Claims 1 to 3,
wherein an amount of the first fluororesin with respect to a total mass of the first fluororesin and the second fluororesin is 10% by mass or more.

5. A molded body of the fluororesin composition according to any one of Claims 1 to 3.

6. A production method for the fluororesin composition according to any one of Claims 1 to 3, the production method comprising:
washing a mixture containing the first fluororesin and the second fluororesin.
